# EUROPEAN PATENT SPECIFICATION

(11) **EP 1 506 713 B1**
(45) Date of publication and mention of the grant of the patent: **19.04.2006**
(21) Application number: 04460034.4
(22) Date of filing: 26.07.2004
(51) Int. Cl.: A23C 3/02, A23C 1/12

(54) **Method of producing condensed milk**
Verfahren zur Herstellung von Kondensmilch
Méthode de fabrication de lait concentré

(30) Priority: 13.08.2003 PL 36164403
(43) Date of publication of application: 16.02.2005
(73) Proprietor: Cargill ( Polska) Spolka z o.o, 55-040 Kobierzyce (PL)
(72) Inventor: Musial, Dariusz, 51-361 Wroclaw (PL); Romaniuk, Jacek, 51-663 Wroclaw (PL); Winecka, Alicja, 53-407 Wroclaw (PL)
(74) Representative: Rejman, Tadeusz

(56) References cited:
- EP-A- 0 940 085
- GB-A- 1 280 051
- US-A- 2 565 085
- US-A- 3 126 283
- US-A- 4 346 121
- US-A- 6 060 105

## Description

The object of the invention makes the method of producing condensed milk containing sweetening additives, sold in unit packages or for a further processing.

The method of producing condensed milk, consisting in degreasing the milk - cleaning centrifuges whereupon the standardization is run in order to determine the quantitative ratio of individual constituents, is known. The standardized milk is directed to the panel unit for pasteurizing and cooling down to the temperature of 4°C. A stabilizer is added to the pasteurized milk. Next, the milk undergoes a hardening operation in the panel sterilizer for several seconds whereupon the milk is cooled down to 60 - 70°C. The next stage of the condensed milk production comprises the sweetening and adding of flavour additives such as cocoa or caramel. Upon a thorough mixing, the mass is directed to the vacuum evaporator where the condensing process follows. At the final stage the cooling and crystallization are performed whereupon the ready-made product in the form of condensed milk is directed to the bottling plant.

The method of producing condensed milk of the invention consists in the cleaning of milk that is subsequently degreased, standardized and pasteurized. The method of the invention is characterized by a stabilizer being added to milk, advantageously natrium citrate in the amount of 0.01 - 0.1% by weight, whereupon the milk is hardened at the temperature of 120 to 130°C and, next, sweetened with syrup in the form of a carbohydrates composition, advantageously with glucose syrup, whereupon flavour additives are added. The glucose syrup contains: 0 - 30% fructose by weight, 25 - 50% glucose by weight, 10 - 40% maltose by weight and 1 - 15% maltotriose by weight. The sweetening follows at the milk temperature of 60- 70°C. The milk hardening follows during 1 to 10 seconds.

The method of producing condensed milk of the invention allows to obtain a product of a mild sweetness. This has been obtained owing to the use of the glucose syrup that is fully blended with the milk since it has a liquid form. Moreover, the adding of glucose syrup hinders an incorrect crystallization of lactose. The next advantageous effect of introducing the glucose syrup is the obtainment of a smooth consistence of the final product, that is condensed milk.

The method of producing condensed milk of the invention is explained in details following the example of its execution.

Fresh, raw milk of an acidity not higher than 7°SH and the alcohol index number not lower than 6 is used for the production of condensed and sweetened milk whereby the milk cannot show flavour and odour defects. These requirements are included in the relevant Polish standard. Milk is cleaned on degreasing - cleaning centrifuges whereupon its standardization is performed in order to determine the quantitative ratio of individual constituents. The standardized milk is directed to the panel unit for pasteurizing and cooling down to the temperature of 4°C. A stabilizer in the form of natrium citrate in the amount of 0.05% by weight is added to the pasteurized milk. Next, the milk undergoes a hardening operation in the panel sterilizer at the temperature 120 - 130°C for the time of five seconds whereupon the milk is cooled down to 60 - 70°C. The next stage of the condensed milk production is the sweeting through the addition of glucose syrup of the following composition:
- glucose 34% by weight
- fructose 9% by weight
- maltose 30%
- high sugars 27%.
Afterwards, flavour additives such as cocoa or caramel, or flavour-odour additives are added. Upon a thorough mixing, the mass is directed to the vacuum evaporator where the condensing process follows. This process is run so that the milk temperature upon condensing is less than 55°C. At the final stage the cooling and crystallization are performed whereupon the final product in the form of condensed milk is directed to the bottling plant.

## Claims

1. A method of producing condensed milk in which milk is degreased, standardized and pasteurized, **characterized in that** a stabilizer is added to milk, advantageously natrium citrate in the amount of 0.01 - 0.1% by weight, whereupon milk is hardened at the temperature of 120 - 130°C and, afterwards, it is sweetened with syrup in the form of a carbohydrates composition, advantageously with glucose syrup, next, flavour additives are added.

2. A method of claim 1, **characterized in that** the glucose syrup contains: 0 - 30% fructose by weight, 25 - 50% glucose by weight, 10 - 40% maltose by weight and 1 - 15% maltotriose by weight.

3. A method of claim 1, **characterized in that** the sweetening follows at the milk temperature of 60- 70°C.

4. A method of claim 1, **characterized in that** the milk hardening is run during 1 to 10 seconds.

## Revendications

1. Méthode de production du lait condensé dans laquelle le lait est dégraissé, normalisé et pasteurisé, **caractérisée en ce, qu'**au lait on ajoute un stabilisateur, de préférence citrate de sodium en quantités de 0,01 - 0,1% en poids, ensuite le lait est trempé à la température de 120 - 130°C et après il est adouci avec du sirop sous forme d'une composition d'hydrocarbures, de préférence avec du sirop de glucose, après on ajoute des additifs gustatifs.

2. Une méthode selon la revendication 1, **caractérisée en ce, que** le sirop de glucose contient: 0 - 30% en poids de fructose, 25 - 50% en poids de glucose, 10 - 40% en poids de maltose et 1 - 15% en poids de maltotriose.

3. Une méthode selon la revendication 1, **caracterisée en ce, que** l'adoucissement s'accomplit à la température du lait de 60- 70°C.

4. Une méthode selon la revendication 1, **caracterisée en ce, que** la trempe du lait est fait durant un temps de 1 - 10 secondes.

## Patentansprüche

1. Herstellungsweise der Kondensmilch, in der die Milch entfettet, normalisiert und pasteurisiert wird, **dadurch gekennzeichnet, dass** zu der Milch ein Stabilisator, vorzugsweise Natriumzitrat in der Menge 0,01 - 0,1% Gewichtsprozent zugegeben wird, wonach die Milch in der Temperatur 120 - 130°C gehärtet und danach mit dem Sirup in Form einer Komposition der Kohlenhydrate, vorzugsweise mit Glukosensirup, gesüßt wird, wonach Geschmackzusatzstoffe zugegeben werden.

2. Herstellungsweise nach Patentanspruch 1, **dadurch gekennzeichnet, dass** der Glukosensirup 0 - 30% Gewichtsprozent Fruktose, 25 - 50% Gewichtsprozent Glukose, 10 - 40% Gewichtsprozent Maltose und 1 - 15% Gewichtsprozent Maltotriose enthält.

3. Herstellungsweise nach Patentanspruch 1, **dadurch gekennzeichnet, dass** das Süßen bei der Milchtemperatur von 60- 70°C geleistet wird.

4. Herstellungsweise nach Patentanspruch 1, **dadurch gekennzeichnet, dass** die Milchhärtung während 1 - 10 Sekunden geführt wird.
